(19) Europäisches Patentamt
European Patent Office
Office européen des brevets

(11) Publication number: **0 346 461 B1**

# (12) EUROPEAN PATENT SPECIFICATION

(45) Date of publication of patent specification: **25.08.93**

(51) Int. Cl.[5]: **G01S 5/06**, G01S 5/02

(21) Application number: **89902357.6**

(22) Date of filing: **06.10.88**

(86) International application number:
**PCT/US88/03474**

(87) International publication number:
**WO 89/04002 (05.05.89 89/10)**

## (54) VEHICLE LOCATION SYSTEM ACCURACY ENHANCEMENT FOR AIRBORNE VEHICLES.

(30) Priority: **23.10.87 US 112870**

(43) Date of publication of application:
**20.12.89 Bulletin 89/51**

(45) Publication of the grant of the patent:
**25.08.93 Bulletin 93/34**

(84) Designated Contracting States:
**DE FR GB IT**

(56) References cited:
**EP-A- 0 174 540**
**DE-C- 3 426 851**
**GB-A- 2 180 425**

**NAVIGATION : JOURNAL OF THE INSTITUTE OF NAVIGATION, vol. 13, no.4, Winter 1966-67, (Washington, DC, US), G. W. Casserly et al.: "The potential use of satellites in hyperbolic position finding", pages 353-366.**

**INTERNATIONAL CONFERENCE ON MARITIME AND AERONAUTICAL SATELLITE COMMUNICATION AND NAVIGATION, IEE, 7-9 March 1978, (London, GB), G. Frenkel : "Methods of radio determination for INMARSAT", pages 37-40.**

(73) Proprietor: **Hughes Aircraft Company**
**7200 Hughes Terrace P.O. Box 45066**
**Los Angeles, California 90045-0066(US)**

(72) Inventor: **SAGEY, William, E.**
**2550 Lakeside Avenue**
**Orange, CA 92667(US)**

(74) Representative: **Colgan, Stephen James et al**
**CARPMAELS & RANSFORD 43 Bloomsbury Square**
**London WC1A 2RA (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3. 10/3.6/3.3. 1)

## Description

### BACKGROUND OF THE INVENTION

This invention relates to vehicle locating systems and more specifically to vehicle locating systems useful in an air traffic control environment which is based upon the use of satellite and ground station components to provide location accuracies superior to those based entirely upon either satellite or ground station components alone.

As air traffic has increased, it has become desirable to reduce the separation between aircraft and thereby increase the available capacity of the nation's controlled air space. The air traffic control system in the United States has as its primary performance criterion the safety of air traffic. Under such circumstances and criterion, uncertainty of the location of aircraft directly translates into large separation requirements between aircraft. Furthermore, present systems which are primarily radar based require the use of transponders aboard the aircraft which must be set by the pilot to a predetermined code in order to identify the aircraft. If the aircraft is equipped with a mode C transponder, altitude may be transmitted on the transponder's signal to an interrogating radar, but such an altitude signal is dependent upon the availability on the aircraft of an altitude encoder in addition to the radar transponder. Radar coverage does not exist throughout the United States but is generally concentrated in areas of high population or frequent on-route flights. As a result, the air traffic control system is severely limited in it's capacity in areas where radar coverage is not available and only the pilot's reporting of position may be relied upon to locate the aircraft. As a result, large separations between aircraft must be provided.

In the present air traffic control system, location of aircraft is provided to a human air traffic controller who provides separation and conflict alerting on the basis of the enhanced radar display before him. While certain computerized conflict alert systems are available, such systems are not very useful in highly congested areas, since the location accuracies of the radar system and the performance envelopes of the aircraft cause many false alarms. Thus, poor location accuracy reduces the air traffic system capacity and the ability to perform computed conflict alert in congested air space.

Satellite based vehicle location systems, such as the Geostar System described in U.S. Patent 4,359,733, dated Nov. 16, 1982 have been proposed to address the accuracy and capacity problems of the existing air traffic control system and to automate the reporting of potential conflicts to pilots based upon information derived from computer determination of aircraft location for aircraft equipped with the appropriate electronic equipment. However, such systems have generally required relatively expensive airborne equipment and complex and expensive satellite systems in order to provide the services required. Furthermore, while they are capable of providing improved accuracies compared to radar based systems and coverage of essentially all of the continental United States by the use of a few satellites, such systems suffer from Geometric Dilution of Precision (GDOP) due to the small crossing angles of the hyperbola of lines of position derived from the vehicle transmissions. For geostationary satellite repeater systems, GDOP factors greater than 100 are typical. A system constructed with ground based repeaters would suffer from a similar GDOP problem in the elevation plane, since the crossing angles of the lines of position for such a system are also small. These magnitudes of GDOP require larger than desired spacing between aircraft.

From the above, it is obvious that neither the systems based entirely on a satellite or satellites nor the systems based entirely on a ground station or stations satisfies the positional accuracy and cost requirements of a next generation air traffic control system. Such a system should minimize the cost and complexity of airborne and spaceborne components and still require a relatively small number of ground stations while providing continental United States coverage.

### SUMMARY OF THE INVENTION

The present invention provides improvements to a satellite based vehicle location system (VLS) such as the system described in EP-A-279834. This document falls under article 54(3) EPC. The basic VLS system according to the invention relies upon at least one simple transponder satellite that receives encoded messages from a transmitter located on an airborne vehicle and retransmits them to a common base station. The position of the airborne user is derived from the time difference of arrival (TDOA) of the signals relayed by the satellites. The vehicle location system according to the present invention is defined in claim 1.

The present invention involves the use of strategically based ground enhancement stations that precisely delay retransmission of a signal received from an airborne vehicle. The ground enhancement stations retransmit the signal to the satellite (with an added data signal to identify the particular ground enhancement station that is transmitting). The satellite, acting as a "bent pipe" transponder, retransmit this information to the common ground base stations that incorporate the ability to calculate the position of the airborne vehicle on the basis of the known geometry of the satellite and ground enhancement stations and the TDOA (time difference of arrival) of the received signals. By the use of the above system the relatively large Geometric Dilution of Precision (GDOP) present in entirely ground based or entirely space based systems is dramatically decreased by superimposing the relatively steep lines of constant time delay of the ground based system upon the relatively shallow lines of constant time delay of the satellite based systems, thereby providing a much more accurate measure of the location of the transmitting vehicle.

The hybrid system according to the present invention preferably employs aircraft signal reception and retransmission at at least one ground enhancement station and three satellites to provide greatly reduced GDOP compared to systems consisting only of repeaters located at a satellite or satellites. Furthermore, if the aircraft is in range of at least two ground enhancement stations, a further reduction of the GDOP factor is attained compared with the case when the user aircraft is in range of only one ground enhancement station. The highest accuracies (and lowest GDOP) occur in an overdetermined (i.e. redundant navigational data) system with approximately seven ground stations surrounding a Terminal Control Area (TCA) of an airport. The common base station computer can then select the set of signals that produce optimum geometry for lowest GDOP.

The present invention preferably utilizes a simple and inexpensive transmitter aboard each aircraft that is designed to incorporate a code unique to that vehicle. The transmitter is designed to be operational the entire time that the aircraft is being operated, including when it is being taxied on the taxiways at the airport; however, during taxi operations, the duty cycle is selected to be relatively long in a preferred embodiment. All signals are preferably short duration pulses employing spread spectrum pseudonoise modulation for the purpose of achieving high range resolution and good discrimination between overlapping signals from multiple aircraft. This waveform design is totally compatible with that employed in the aforementioned EP-A-279834. Thus, the transmitter described above provides means of uniquely identifying each aircraft while it is being operated, but the simplicity of the transmitter prevents unnecessary costs for aircraft operating within the system. The aircraft may also be equipped with a conflict alert receiver which is capable of receiving a message designed to alert the pilot that a potential collision is developing between his aircraft and that of another. A conflict alert system could also incorporate means to provide the pilot with a suggested course of action to avoid the conflict. Such a conflict avoidance message would be based upon the calculation of the position and projected position of all aircraft in the system and various collision avoidance criteria programmed into a central computer in the base station.

The signal transmitted by the airborne user is received by one or more satellites and a plurality of ground stations within the line of sight and range of the transmitter. The frequency of the transmitter should be chosen to provide for reliable line of sight communication between the airborne vehicle and the satellite and ground stations. The satellite portion of the system preferably incorporates relatively simple satellites, preferably located at synchronous altitudes, which provide a "bent pipe" transponder system to relay the signal received from the airborne vehicle to a remote ground base station without processing the signal in any way. The satellites may be tracked and their precise location determined by separate means, such as dedicated tracking stations or a satellite tracking network. The satellite preferably retransmits the signals received from the airborne vehicle on a narrow beam to an antenna located at the ground base station. The ground base station may incorporate a plurality of narrow beam receiving antennas, each of which is pointed at its respective satellite, so that the satellites may all operate at a similar frequency without interfering with one another. Alternatively, different frequencies may be assigned to each satellite and their signals separated upon receipt by a single wide beam antenna.

A plurality of ground enhancement stations are located, e.g. throughout the United States, to provide coverage of airborne vehicles and to receive the transmissions of the airborne vehicle transmitters. Each ground enhancement station then retransmits the signals received from the airborne vehicles, preferably on a new frequency (to allow simultaneous transmissions and receptions from more than one aircraft) and superimposing upon the signal the ground station identification. The time of retransmission is precisely controlled so that the integrity of the measurement system is preserved. The ground base station then calculates the position of the airborne user based upon the known locations of the satellites and the various ground enhancement stations and the time difference of arrival (TDOA) of the signals transmitted directly from the airborne user to the satellite and the relayed signals through the ground enhancement stations.

The location accuracy of a vehicle location system according to the invention is substantially enhanced in that the Geometric Dilution of Precision (GDOP) associated with either all satellite or all ground based schemes is substantially reduced. This reduction in GDOP is possible because the crossing angles of the hyperbola of constant time delay for ground stations and the hyperbola of constant time delay for satellites is substantially greater than the crossing angle from satellite to satellite or ground station to ground station for most available geometries. When such crossing angles approach 90° the errors associated with accuracy of time delay measurement are greatly reduced, since such errors are manifest in increased radii of the hyperbola generated. When the hyperbola meet at shallow angles, the area of uncertainty is much larger than when they meet at relatively steep angles and the area of uncertainty is minimized when the crossing angles approach 90°. The present invention provides these improved accuracies while minimizing the expense of the airborne, spaceborne and land based elements of the system, since none of these components require complex electronics or computing capability except for a small number of central processing base stations designed to derive position and determine potential conflicts.

Thus, the system of the present invention represents a substantial improvement in accuracy and a decrease in cost compared with previous systems. Other features and advantages of the invention will become apparent from the following detailed description, taken in conjunction with the accompanying drawings, which illustrate, by way of example, the features of the invention.

## BRIEF DESCRIPTION OF THE DRAWINGS

FIG. 1 is a schematic overview of an arrangement of the components and the airborne user in an embodiment of the present invention.

FIG. 2 is an illustration of the tetrahedron formed by the unit vectors from the user to the satellites of a vehicle location system.

FIG. 3 is a schematic illustration of the components of an embodiment of the present invention illustrating a single user ground enhancement station, satellite repeater and ground base station for the purposes of simplicity.

FIG. 4 is a graphic representation of enhancement station locations and coverage versus user typical altitude.

FIG. 5 is an exemplary distribution of a ground enhancement station deployment for the Southern California area illustrating ground enhancement stations placed at the higher elevations in the area.

FIG. 6 is a graph of Geometric Dilution of Precision (GDOP) at a latitude of 33 40′ as a function of longitude for the eight (8) ground enhancement stations of FIG. 4, illustrating the improvement in GDOP with the addition of one satellite to the basic ground enhancement station GDOP capability.

FIG. 7 is a graph of the number of sites required in one embodiment for a nationwide deployment of ground enhancement stations for the present invention as a function of aircraft altidude coverage for ground enhancement station heights above terrain of 0 feet, and 1,000 feet.

FIG. 8 is a representation of the geometric relationships associated with the derivation of the number of sites for a continental United States deployment in another embodiment of the present invention.

FIG. 9 is a schematic illustration of the arrangement of components of a ground enhancement station in accordance with the present invention.

FIG. 10 is a schematic illustration of the arrangement of the components of the electronic transmitter system for an airborne user of an embodiment in accordance with the present invention.

FIG. 11 illustrates the arrangement of the components in the satellite portion of an embodiment in accordance with the present invention.

FIG. 12 illustrates the arrangement of the components of the ground base station of an embodiment in accordance with the present invention.

## DETAILED DESCRIPTION

As shown in the exemplary drawings, the invention is embodied in a vehicle locating system that uses both satellite based and ground based transponders to relay signals from an airborne user's transmitter to a ground base station at which the calculation of the position of the airborne user is made, based upon the known geometry and locations of the satellites and ground base stations and the time differences between the receipt of the various signals at the ground station. The present invention uses relatively inexpensive and simple components for the radio frequency portions of the airborne users' equipment, the ground stations and the satellite systems and concentrates the computational and conflict resolution capability in one or more relatively large and complex ground based facilities. Previous vehicle location systems that were either entirely satellite based or entirely ground based have required relatively large numbers of complex electronic assemblies and computer systems deployed with the users and/or satellites to provide the vehicle location services required.

One problem associated with such previous systems is the GDOP associated with the relatively shallow angles of intersection of the hyperbola of constant time delay for an airborne user in satellite systems, in which the satellites are at geosynchronous orbit. Using such a system, any error in measurement in time of arrival of the signal at the satellite from the airborne user or, conversely, at the airborne user from a signal emanating from the satellite, results in fairly large errors due to this geometry. Similarly, entirely ground based systems suffer from relatively limited regional coverage and GDOP errors unless a very large number of ground based stations are used to assure adequate geometry between airborne user and a multiplicity of stations, thereby allowing a favorable geometry to be chosen.

Spacecraft or airborne systems that perform the calculation of vehicle location at either the aircraft or the spacecraft, furthermore, suffer from the fact that such remote and unmanned locations must contain a fairly substantial and expensive computational capability compared to the concept of the present invention.

FIG. 1 illustrates the basic arrangement of the present invention in which airborne user 2 transmits a signal 4 on frequency $F_1$ through omnidirectional antenna 6. Such signal may be received by satellites 8 and ground enhancement stations 10. Ground enhancement stations 10 retransmit the signals received at frequency $F_1$ from user 2, to satellites 8 on frequency $F_2$ after a precise time delay and after including in the signal an indication of the ground enhancement station identification . The satellites 8 then retransmit the signal on Frequency $F_3$ to the antennas 12 of the ground base station 14. Ground base station 14 contains the ability to compute the location of airborne user 2 on the basis of the time delays of arrival (TDOA) of the signals transponded by satellites 8 and ground enhancement stations 10 and the known locations of each ground enhancement station and satellite. Thus, the present invention minimizes the cost and complexity associated with all of the elements of the system remote from ground base station 14 and provides a single source of information on the location of vehicles in the air traffic control system. At the aircraft owner's option, each aircraft may be equipped with a receiver which would be capable of receiving and decoding information from the central ground station 14 to provide the airborne user with an indication of his present position and any potential conflict with other airborne users. Such a signal could be relayed by either a satellite or a selected ground enhancement station within receiving range of the airborne user.

From the above it may be seen that the present invention provides important benefits compared to currently envisioned systems, in that the cost is dramatically reduced compared to systems that perform calculation onboard the user, thereby making the system available to the smaller, less affluent user. Thus, the present invention can promote air safety in that all users can be equipped with a transponder and be part of a national airspace system with resultant increased safety and enforceability.

Another important benefit to the present invention is its ability to provide accuracy of location that is not available with other systems without resorting to extremely accurate measurements of range from a large proliferation of satellites (e.g. the GPS system) or other complex adjuncts to the relatively simple system of the present invention. The GDOP for the generalized geometry between a fixed location and the elements of a hyperbolic navigation system is based upon a calculation of position from differences between time of receipt of a uniformly propagated signal.

## Geometric Dilution of Precision

The effects of geometry on the performance of any radio-navigation system is expressed in terms of GDOP. For the case of satellite based systems, GDOP can be expressed as (for a given altitude input):

$$GDOP_a = \sqrt{trace(G_a R G_a)^{-1}} \quad (1)$$

where

$$G_a = \begin{bmatrix} 0 & 0 & -1 & 0 \\ l_1 & m_1 & n_1 & -1 \\ l_2 & m_2 & n_2 & -1 \\ l_3 & m_3 & n_3 & -1 \end{bmatrix} \quad (2)$$

and

$$R = \begin{bmatrix} 1/u^2 & 0 & 0 & 0 \\ 0 & 1 & 0 & 0 \\ 0 & 0 & 1 & 0 \\ 0 & 0 & 0 & 1 \end{bmatrix} \qquad (3)$$

Note,

$l_i$, $m_i$, $n_i$ = the direction cosines from the user to the ith satellite; subscript "a" refers to altimeter aiding; and u is the ratio of the altitude error to the random pseudorange error as given by:

$$u = \frac{\sigma a}{\sigma p} \qquad (4)$$

While the development of GDOP derived here is based upon a fixed altitude input error, as will be discussed later, such assumption has direct relevance to the present invention, in that the link from user to ground enhancement station is a means of improving the estimate of altitude of the user compared to direct measurements of TDOAs at the satellites or ground base stations.

It is now possible to expand the expression for $GDOP_a$ and obtain a closed form solution. Noting

$$(G_aRG_a)^{-1} = \frac{adj(G_aRG_a)}{det(G_aRG_a)} \qquad (5)$$

$$= \frac{adj(G_aRG_a)}{det(G_a)det(R)det(G_a)} \qquad (6)$$

$$= \frac{d}{D^2} \qquad (7)$$

Substituting (7) into (1) yields

$$GDOP_a = \frac{\sqrt{t}}{D} \qquad (8)$$

where

$t$ = trace(d).

Algebraic manipulation yields

$$\begin{aligned} t = {} & a_{33}[(a_{11} + 3)a_{22} - a_{42}^2 - a_{21}^2 + 3a_{11} - a_{41}^2] \\ & -a_{43}^2(a_{11} + a_{22}) + 2a_{43}(a_{31}a_{41} + a_{32}a_{42}) \\ & -a_{32}^2(a_{11} + 3) + 2a_{21}a_{31}a_{32} \qquad (9) \\ & -a_{22}(a_{31}^2 - 3a_{11} + a_{41}^2) \\ & -a_{11}a_{42}^2 + 2a_{41}a_{21}a_{42} - 3a_{31}^2 - 3a_{21}^2 \end{aligned}$$

where the $a_{ij}$s are functions of the direction cosines from the user to the three satellites being used in conjunction with the altimeter. These relationships are given by the following equations:

$$a_{11} = l_1^2 + l_2^2 + l_3^2$$

$a_{21} = l_1 m_1 + l_2 m_2 + l_3 m_3$
$a_{22} = m_1^2 + m_2^2 + m_3^3$
$a_{31} = l_1 n_1 + l_2 n_2 + l_3 n_3$
$a_{32} = n_1 m_1 + n_2 m_2 + n_3 m_3$ (10)
$a_{33} = n_1^2 + n_2^2 + n_3^2 + l/u^2$
$a_{41} = -(l_1 + l_2 + l_3)$
$a_{42} = -(m_1 + m_2 + m_3)$
$a_{43} = -(n_1 + n_2 + n_3)$

Similarly, by combining (6) and (7), it can be shown that

$$D^2 = [(l_2 - l_1)(m_3 - m_2) - (l_3 - l_2)(m_2 - m_1)]^2/u^2. \quad (11)$$

The solution for $GDOP_a$ is therefore completely given in enclosed form by (8) through (11).

There are several interesting factors to note about the expression for $D^2$ given in (11). It is immediately obvious that it is independent of the $n_i$ direction cosines. This fact is of interest since the $n_i$ direction cosines refer to the local vertical direction, and hence would yield information analogous to that obtained through the use of an altimeter. This is of further consequence when it is realized that the expression for D is directly related to the volume of the tetrahedron that is formed by four points. In this case, the four points are defined by the unit vectors from the user to the three satellites and the altitude reference which can be considered to be a pseudosatellite located at the center of the earth. Thus, any improvement in the altidude reference has a direct relationship to reducing GDOP. The present invention provides this means of improving GDOP by use of the ground enhancement stations.

Furthermore, it is known that the volume of the tetrahedron formed by these vectors is a fairly reliable indicator of GDOP. This can be seen from the relationship

$$V = \frac{1}{6}(A \times B) \bullet C \quad (12)$$

for the tetrahedron depicted in FIG. 2. Note that the following definitions are used:

V = volume of the tetrahedron
$e_a$ = unit vector from user to altimeter (satellite at center of earth)
$e_1$ = unit vector from user to satellite 1
$e_2$ = unit vector from user to satellite 2
$e_3$ = unit vector from user to satellite 3
A = vector from altimeter (satellite at center of earth) to satellite 1
B = vector from satellite 1 to satellite 2
C = vector from satellite 2 to satellite 3

It can be shown that

$$(A \times B) \bullet C = \det(G_a) \quad (13)$$

which yields

$$(A \times B) \bullet C = [(l_2 - l_1)(m_3 - m_2) - (l_3 - l_2)(m_2 - m_1)] \quad (14)$$

It can readily be seen that this is similar to the expression given in (11). Therefore combining (11), (12), and (14) yields:

$$V = \frac{1}{6} Du \quad (15)$$

The relationship between the volume of the tetrahedron and $GDOP_a$ is therefore given by

$$GDOP_a = \frac{u\sqrt{t}}{6V} \quad (16)$$

If it is assumed that t is nearly constant, it would be possible to minimize $GDOP_a$ by maximizing the volume of the tetrahedron. The validity of the constant t assumption has been verified by computer simulations comparing true $GDOP_a$ with the volume of the tetrahedron. In reality, it is known that t is not constant, but its variations may be small when compared to the divergencies in D.

From the above it can be seen that errors in altimeter input for satellite only based systems propogate as large GDOP errors for the system. By providing a more direct measurement of altitide by ranging to the ground enhancement stations, the present invention substantially reduces the errors that would otherwise be present in satellite based systems and reduces the GDOP errors associated with timing errors in the system.

FIG. 3 illustrates the operation of the system of the present invention which utilizes a ground enhancement station for the purpose of transponding the signal received from an aircraft to the satellite. Airborne user 2 transmits a signal on transmission frequency $F_1$ which is received by antenna 20 at ground enhancement station 10. The ground enhancement station then adds a site I.D. tag to the message and, after a precise time delay, retransmits the message on frequency $F_3$ from antenna 16. The signal on frequency $F_3$ is received by satellite 8 which incorporates a transponder capable of direct receipt of the signal on frequency $F_1$ from airborne user 2 or the I.D. tag message on frequency $F_3$ from ground enhancement station 10. The satellite retransmits the combined messages consisting of the transponded initial signal received on frequency $F_1$ from airborne user 2 and the transponded signal from ground enhancement station 10 on frequency $F_3$ on a new frequency $F_2$ to antenna 22 at ground base station 14.

A vehicle location system according to the present invention requires that there be at least four stations to which an airborne user may transmit in order to provide location in X, Y and Z relative to the earth's surface. Such a system may consist of one or more satellites and a plurality of ground stations and in one preferred embodiment a three satellite constellation may be used along with a plurality of ground stations to provide an over-determined system. Such a geometry requires that at least two of the ground stations be within the receiving range of the aircraft and are capable of retransmission of the received signal to at least two of the satellites in the constellation. Alternatively, a relatively larger number of ground stations may be used with relatively fewer satellites, provided that the criterion of at least four geometrically separated receiving sites are available. The addition of receiving sites in excess of the minimum number required improves the accuracy of the system and reduces the GDOP observed.

FIG. 4 is an illustration of typical ground enhancement station coverage. As shown by the graphic representation, the line of sight (LOS) range of the station is a function of the user altitude, the enhancement station altitude and the distance between enhancement stations. Thus, the coverage of the stations for users is on the order of 25 miles for the station geometry shown for user altitudes in excess of 100 feet. If a user altitude of 1,000 or above is used as a system minimum (a reasonable assumption for air traffic in populated areas, since air traffic is not permitted below this altitude unless actually in the process of landing or taking off), then coverage on the order of 150 miles can be achieved with the geometries shown.

Using the geometry of FIG. 4 and the mathematical basis for GDOP described above, GDOP has been calculated for representative "all satellite" systems and systems according to the invention. These results are tabulated in tables 1 and 2 for the reference point of FIG. 4 and a latitude midway between the ground enhancement stations. These calculations clearly show the dramatic reduction in GDOP available with the present invention. As illustrated by the GDOP numbers in tables 1 & 2, these reductions are on the order of 30,000:1 for typical geometries when the 4 satellite system is compared to a 3 satellite + 2 ground enhancement station configuration according to the invention.

| | 114 | 115 | 116 | 117 | 118 | 119 | 120 |
|---|---|---|---|---|---|---|---|
| 4 SAT | 71,290 | 87,184 | 83,640 | 60,560 | 57,870 | 55,508 | 53,428 |
| 3 SAT + 1 ENH. STA. | 60.09 | 41.31 | 26.82 | 15.99 | 9.56 | 8.14 | 9.34 |
| 3 SAT + 2 ENH. STA. | 3.10 | 2.88 | 2.56 | 2.19 | 1.81 | 1.83 | 2.28 |

GDOP VS LONGITUDE,
REFERENCE LATITUDE = 34.0°
TABLE 1

| | 114 | 115 | 116 | 117 | 118 | 119 | 120 |
|---|---|---|---|---|---|---|---|
| 4 SAT | 71,696 | 67,562 | 63,996 | 60,895 | 58,185 | 55,807 | 53,712 |
| 3 SAT + 1 ENH. STA. | 33.28 | 24.68 | 17.44 | 12.08 | 9.02 | 8.14 | 8.48 |
| 3 SAT + 2 ENH. STA. | 3.65 | 3.46 | 3.17 | 2.72 | 1.98 | 2.03 | 3.00 |

GDOP VS LONGITUDE
REFERENCE LONGITUDE + 0.5 = 34.5°
TABLE 2

FIG. 6 is an illustration of the calculated GDOP versus longitude for an entirely earth based system incorporating earth stations of various heights above the earth's terrain with the stations chosen from the exemplary distribution of such earth stations illustrated in FIG 5. A curve illustrating the improvement associated with addition of one satellite to the system is also shown. As the marked curves in FIG. 5 illustrate, the height of the ground enhancement station has a substantial effect upon the GDOP for an all ground based system. However, when a single satellite is added to the ground based geometry described in FIG. 4, GDOP is dramatically improved to less than 2.0 in the longitudes represented by the ground enhancement station geometry illustrated. Thus, the combination of at least one satellite with three or more ground ehancement stations within the communication line of sight of the airborne user provides nearly 2 orders of magnitude improvement in the GDOP associated with such a geometry compared to an all ground based system. Similarly, the use of a plurality of ground enhancement sites with a constellation of two or more satellites will dramatically reduce the GDOP which would otherwise be experienced for an all satellite system.

FIG. 7 illustrates the number of ground enhancement sites required to provide line of sight coverage from an aircraft to at least two enhancement sites throughout the continental United States for enhancement station heights of 1,000 feet and ground level and for an airborne user altitide varying between 1,000 and 10,000 feet. As may be seen from these curves, the number of enhancement stations required is dramatically reduced if an altitude for the enhancement station is chosen of only 1,000 feet above the terrain. In practical terms, such altitudes may not be necessary in areas where an extremely low variation in height of the highest features above the majority of the terrain is found and higher heights may be necessary in the vicinity of extremely rugged terrain. However, as a general rule, any increase in an enhancement station height will result in a corresponding decrease in the number of stations required for a given geographic coverage.

FIG. 8 illustrates the geometric formulation for deriving the number of sites in a continental United States (CONUS) deployment for the ground enhancement stations of the present invention. If the CONUS is represented by a rectangle of approximately 3,000 miles in breadth and 1,500 miles in height as illustrated in FIG. 7, the spacing between ground enhancement stations may be represented by $R_H$ and the number of stations by the equation $N_S$ equals ($X \times Y/R_H^2$) where $R_H$ is equal to 1.416 x ($\sqrt{A_T} + \sqrt{H_{ES}}$) = line of sight range in miles.

$$N_S = \frac{XY}{R_H^2}$$

Where

$N_S$ = Number of Enhancement Sites

$H_{ES}$ = Height of the Enhancement Station in Feet

$A_T$ = Altitude of the Target in feet

FIG. 9 is an illustration of a basic block diagram associated with an embodiment of the ground enhancement station 10 of the present invention. A clock 24 provides a time standard to fixed time delay 26, site I.D. read only memory (ROM) 28 and to timing receiver 30. The output of time delay 26 is input to data register 32 which is driven by data detector 34 which accepts the signal from receiver 36 tuned to the frequency of the output of the user transmitter. These signals are summed by summer 38 to maintain synchronization of the ouput of the modulator 40. Power amplifier 42 is driven by modulator 40 and outputs the resulting signal to antenna 16 for connection to satellite 8 (FIG. 3).

FIG. 10 illustrates an arrangement of functions for an embodiment of the onboard transmitter of the airborne user of the present invention. The onboard transmitter 44 contains an oscillator clock reference unit 46 and the signal encoder 48 to provide an output signal fed to amplifier 50 and then to antenna 6. The waveform of the transmitted signal from transmitter 44 must be carefully controlled to allow measurement of the precise time of arrival of the signal transmitted from the transmitter through the transponders of the ground enhancement stations 10 and the satellites 8 to the ground base station 14. The waveform of the transmitted signal from the aircraft is identical to that utilized in the Vehicle Location System patent application referenced above.

FIG. 11 illustrates the arrangement of components for the satellites 8 to be used in the present invention. Such satellites may be geostationary satellites located at approximately equatorial elevations over the continental United States and spaced to provide visability of two or more satellites for any given airborne user. The satellites of the present system may incorporate a C Band or other suitable frequency transponder 52 designed to be a "bent pipe" amplifier and transponder for the signals received from the airborne user and the ground enhancement stations. The satellite would receive the transmissions from the ground enhancement station and the airborne user on the frequencies $F_1$, $F_3$ used for such transmissions at antenna 54 and retransmit on a single frequency $F_2$ via antenna 56 to the ground base station 14 at which the computational capability required to locate the airborne user on the basis of the time delays measured resides. The transponder system utilizes low noise receivers 58 to separately process the frequencies $F_1$, $F_3$ received at antenna 54 and frequency translators 60 to convert those signals to inputs to hybrid transmitter 62 which outputs a composite signal containing the inputs at frequencies $F_1$ and $F_3$ for retransmission through antenna 56 at frequency $F_2$. Thus, the satellite component of the present invention avoids the necessity of placing complex electronics or computers in the satellite vehicle, thereby reducing the total cost required to deploy a vehicle location system.

FIG. 12 illustrates the arrangement of the ground base station 14 of the present invention. The radio frequency receiver section 64 contains receivers 66, 68, 70 that each receive the signals through antennas 72, 74, 76 respectively, that are tuned to individual satellites and aimed to receive their narrow frequency band and angle transmissions. Correlation section 78 of the base station incorporates correlators 80, 82, 84 to respectively receive outputs of receivers 66, 68, 70 and thereby process inputs to TDOA processor 86. These data are then output to a data processing digital computer 88 in which the location of the user is calculated on the basis of the TDOA signals. These locations can be output to user interface module 90 that contains modems 92 that provide access by users to the vehicle addresses and locations. The data processing computer may also be controlled and accessed by operator display/control console 94 and can provide control of TDOA processor 86.

From the above discussion, it may be seen that the present invention provides location accuracies for airborne users substantially superior to those available to entirely ground based, or entirely satellite based vehicle location systems. Furthermore, the invention minimizes the expense of system components for the airborne user satellites and ground enhancement stations while concentrating the computational and complex engineering components of the system in a relatively small number of earth base stations. The system may also incorporate means to transmit information regarding the location and potential collision conflict data to airborne users who are equipped with appropriate receivers. While particular forms of the invention have been illustrated and described it will also be apparent that various modifications may be made without departing from the scope of the invention as defined in the appended claims.

## Claims

1. A vehicle location system for locating the position of an airborne user vehicle (2), including a transmitter (44) located aboard the user vehicle (2) and being capable of periodic transmission of a signal unique to said user vehicle, a plurality of ground stations and at least one satellite, in which:

   said ground stations include a plurality of ground enhancement stations (10) capable of receipt of said signal from said user vehicle (2) and retransmission thereof with a predetermined time delay;

   said satellite (8) is capable of receipt of said signal transmitted from said user vehicle (2) and said signal retransmitted by said ground enhancement stations (10), said satellite (8) further capable of retransmission of a single composite signal incorporating said received signals; and

   said ground stations include a ground base station (14) being capable of receipt of said composite signal from said satellite (8) and incorporating computer means (88) to calculate the position of said user vehicle (2) from the time difference of arrival of the signals transmitted directly from the user vehicle (2) to the satellite (8) and the relayed signals through the ground enhancement stations (10) to the satellite (8).

2. A vehicle location system according to Claim 1 further characterized in that said vehicle transmitter further includes a digital radio transmitter (44) comprising means to transmit a spread spectrum pseudonoise digital radio signal.

3. A vehicle location system according to any of Claim 1 or Claim 2 further characterized in that each said ground enhancement station (10) further comprises means (28) to identify said retransmission of said signal transmitted from said user vehicle (2) as a retransmitted signal from the particular ground enhancement station (10).

4. A vehicle location system according to any of Claims 1 to 3 further characterized in that said means to retransmit said signal from said satellite (8) comprises a narrow beam electromagnetic transmitter antenna (56).

5. A vehicle location system according to Claim 4 further characterized in that said mean to receive said signal from said satellite (8) at said ground base station (14) further comprises narrow beam antenna means (12) to receive said narrow beam electromagnetic transmissions from said satellite (8).

6. A vehicle location system according to any of Claims 1 to 5 further characterized in that said vehicle location system comprises a plurality of said satellites (8) in communication with said ground base station (14).

7. A vehicle location system according to Claim 6 further characterized in that said ground base station (14) further comprises a plurality of antennas (72, 74 76) respectively tuned to the respective satellites (8) and aimed to receive their respective transmitted signals.

8. A vehicle location system according to any of Claims 1 to 7 further characterized in that said user vehicle transmitter (44) is capable of transmission at a first frequency F1, said ground enhancement stations (10) include means (40, 42) for retransmission of said user vehicle signal at a second frequency F2, and said satellite (8) includes means (62) for retransmission of said single composite signal at a third frequency F3.

9. A vehicle location system according to Claim 8 further characterized in that said satellite (8) further includes a first receiver (58) tuned to said first frequency F1 and a second receiver (58) tuned to said second frequency F2.

10. A vehicle location system according to any of Claims 1 to 7 further characterized in that said computer means to calculate the position of said user vehicle (2) comprises a digital computer.

## Patentansprüche

1. Ein Fahrzeugortungssystem zum Orten der Position eines luftgestützten Anwenderfahrzeuges (2), welches einen Sender (44) umfaßt, der an Bord des Anwenderfahrzeuges (2) angeordnet ist und der in der Lage ist ein Signal periodisch auszusenden, das für das Anwenderfahrzeug charakteristisch ist, sowie eine Mehrzahl von Bodenstationen und wenigstens einen Satelliten, in dem:
die Bodenstationen eine Mehrzahl von Boden-Verstärkungsstationen (10) umfassen, die in der Lage sind, das Signal von dem Anwenderfahreug (2) zu empfangen und es mit einer vorherbestimmten Zeitverzögerung erneut auszusenden;
der Satellit (8) in der Lage ist, das von dem Anwenderfahrzeug (2) ausgesandte Signal zu empfangen, sowie das von den Boden-Verstärkungsstationen (10) erneut ausgesandte Signal, und wobei der Satellit (8) weiter in der Lage ist, ein einzelnes zusammengesetztes Signal erneut auszusenden, das die empfangenen Signale enhält; und
die Bodenstationen eine Bodenbasisstation (14) umfassen, die in der Lage ist, das zusammengesetzte Signal von dem Satelliten (8) zu empfangen und die Computervorrichtungen (88) enthält, um die Position des Anwenderfahrzeuges (2) aus dem Zeitunterschied der Ankunft zwischen den direkt von dem Anwenderfahrzeug (2) abgestrahlten Signalen zu dem Satelliten (8) hin und den über die Boden-Verstärkungsstationen (10) zu dem Satelliten (8) verzögerten Signalen zu errechnen.

2. Ein Fahrzeugortungssystem nach Anspruch 1, das desweiteren dadurch gekennzeichnet ist, daß der Fahrzeugsender desweiteren einen digitalen Radiosender (44) umfaßt, welcher Vorrichtungen enthält, um ein digitales Radiosignal mit gedehntem Spektrum-Pseudorauschen zu übertragen.

3. Ein Fahrzeugortungssystem nach einem der Ansprüche 1 oder 2, desweiteren dadurch gekennzeichnet, daß jede der Boden-Verstärkungsstationen (10) desweiteren Vorrichtungen (28) zum Identifizieren der erneuten Aussendung des Signales enthält, das von dem Anwenderfahrzeug (2) ausgesandt worden ist, als ein erneut ausgesandtes Signal von der bestimmten Boden-Verstärkungsstation (10).

4. Ein Fahrzeugortungssystem nach einem der Ansprüche 1 bis 3, desweiteren dadurch gekennzeichnet, daß die Vorrichtung zum erneuten Aussenden des Signales von dem Satelliten (8) eine elektromagnetische Sendeantenne (56) für enge Strahlenbündel umfaßt.

5. Ein Fahrzeugortungssystem nach Anspruch 4, desweiteren dadurch gekennzeichnet, daß die Vorrichtung zum Empfang des Signales von dem Satelliten (8) bei der Bodenbasisstation (14) desweiteren eine Antennenvorrichtung (12) für enge Strahlenbündel umfaßt, um die elektromagnetischen Sendungen der engen Strahlenbündel von dem Satelliten (8) zu empfangen.

6. Ein Fahrzeugortungssystem nach einem der Ansprüche 1 bis 5, dadurch gekennzeichnet, daß das Fahrzeugortungssystem eine Mehrzahl der Satelliten (8) umfaßt, die mit der Bodenbasisstation (14) in Verbindung stehen.

7. Ein Fahrzeugortungssystem nach Anspruch 6, desweiteren dadurch gekennzeichnet, daß die Bodenbasisstation (14) desweiteren eine Mehrzahl von Antennen (72, 74, 76) umfaßt, die jeweils auf einen entsprechenden der Satelliten (8) abgestimmt und auf ihn ausgerichtet sind, um ihre jeweils ausgesandten Signale zu empfangen.

8. Ein Fahrzeugortungssystem nach einem der Ansprüche 1 bis 7, desweiteren dadurch gekennzeichnet, daß der Anwenderfahrzeugsender (44) in der Lage ist, bei einer ersten Frequenz F1 zu senden, die Boden-Verstärkungsstationen (10) Vorrichtungen (40, 42) umfassen, um das Signal des Anwenderfahrzeuges bei einer zweiten Frequenz F2 erneut auszusenden und worin der Satellit (8) eine Vorrichtung (62) umfaßt, um das einzelne zusammengesetzte Signal bei einer dritten Frequenz F3 erneut auszusenden.

9. Ein Fahrzeugortungssystem nach Anspruch 8, desweiteren dadurch gekennzeichnet, daß der Satellit (8) desweiteren einen ersten Empfänger (58) enthält, der auf die erste Frequenz F1 abgestimmt ist, sowie einen zweiten Empfänger (58), der auf die zweite Frequenz F2 abgestimmt ist.

**10.** Ein Fahrzeugortungssystem nach einem der Ansprüche 1 bis 7, desweiteren dadurch gekennzeichnet, daß die Computervorrichtungen zum Errechnen der Position des Anwenderfahrzeuges (2) einen digitalen Computer umfassen.

## Revendications

**1.** Un système de localisation de véhicule pour localiser la position d'un véhicule aérien d'utilisateur (2), comprenent un émetteur (44) situé à bord du véhicule d'utilisateur (2) et capable d'émettre périodiquement un signal spécifique de ce véhicule d'utilisateur, un ensemble de stations terrestres et au moins un satellite, dans lequel :

les stations terrestres comprennent un ensemble de stations terrestres d'amélioration (10) capables de recevoir le signal provenant du véhicule d'utilisateur (2) et de réémettre celui-ci avec un retard prédéterminé;

le satellite (8) est capable de recevoir le signal émis par le véhicule d'utilisateur (2) et le signal réémis par les stations terrestres d'amélioration (10), ce satellite (8) étant en outre capable de réémettre un seul signal composite contenant les signaux reçus; et

les stations terrestres comprennent une station terrestre de base (14) qui est capable de recevoir le signal composite provenant du satellite (8), et qui contient des moyens de calcul (88) pour calculer la position du véhicule d'utilisateur (2) à partir de la différence de temps d'arrivée des signaux qui sont émis directement par le véhicule d'utilisateur (2) vers le satellite (8) et des signaux relayés vers le satellite (8) par les stations terrestres d'amélioration (10).

**2.** Un système de localisation de véhicule selon la revendication 1, caractérisé en outre en ce que l'émetteur de véhicule comprend un radioémetteur numérique (44) comprenant des moyens pour émettre un signal radioélectrique numérique de pseudo-bruit à spectre étalé.

**3.** Un système de localisation de véhicule selon l'une quelconque des revendications 1 ou 2, caractérisé en outre en ce que chaque station terrestre d'amélioration (10) comprend en outre des moyens (28) pour identifier la réémission du signal émis par le véhicule d'utilisateur (2) comme étant un signal réémis provenant de la station terrestre d'amélioration (10) particulière.

**4.** Un système de localisation de véhicule selon l'une quelconque des revendications 1 à 3, caractérisé en outre en ce que les moyens destinés à réémettre le signal à partir du satellite (8) comprennent une antenne d'émetteur électromagnétique à faisceau étroit (56).

**5.** Un système de localisation de véhicule selon la revendication 4, caractérisé en outre en ce que les moyens destinés à recevoir le signal provenant du satellite (8) à la station terrestre de base (14) comprennent une structure d'antenne à faisceau étroit (12) pour recevoir les émissions électromagnétiques à faisceau étroit provenant du satellite (8).

**6.** Un système de localisation de véhicule selon l'une quelconque des revendications 1 à 5, caractérisé en outre en ce que ce système de localisation de véhicule comprend un ensemble des satellites (8) en communication avec la station terrestre de base (14).

**7.** Un système de localisation de véhicule selon la revendication 6, caractérisé en outre en ce que la station terrestre de base (14) comprend en outre un ensemble d'antennes (72, 74, 76) qui sont respectivement accordées sur les satellites respectifs (8) et pointées pour recevoir leurs signaux émis respectifs.

**8.** Un système de localisation de véhicule selon l'une quelconque des revendications 1 à 7, caractérisé en outre en ce que l'émetteur de véhicule d'utilisateur (44) est capable d'émettre à une première fréquence F1, les stations terrestres d'amélioration (10) comprennent des moyens (40, 42) pour réémettre le signal de véhicule d'utilisateur à une seconde fréquence F2, et le satellite (8) comprend des moyens (62) pour réémettre le signal composite unique à une troisième fréquence F3.

**9.** Un système de localisation de véhicule selon la revendication 8, caractérisé en outre en ce que le satellite (8) comprend en outre un premier récepteur (58) accordé sur la première fréquence F1 et un second récepteur (58) accordé sur la seconde fréquence F2.

**10.** Un système de localisation de véhicule selon l'une quelconque des revendications 1 à 7, caractérisé en outre en ce que les moyens de calcul qui sont destinés à calculer la position du véhicule d'utilisateur (2) comprennent un ordinateur.

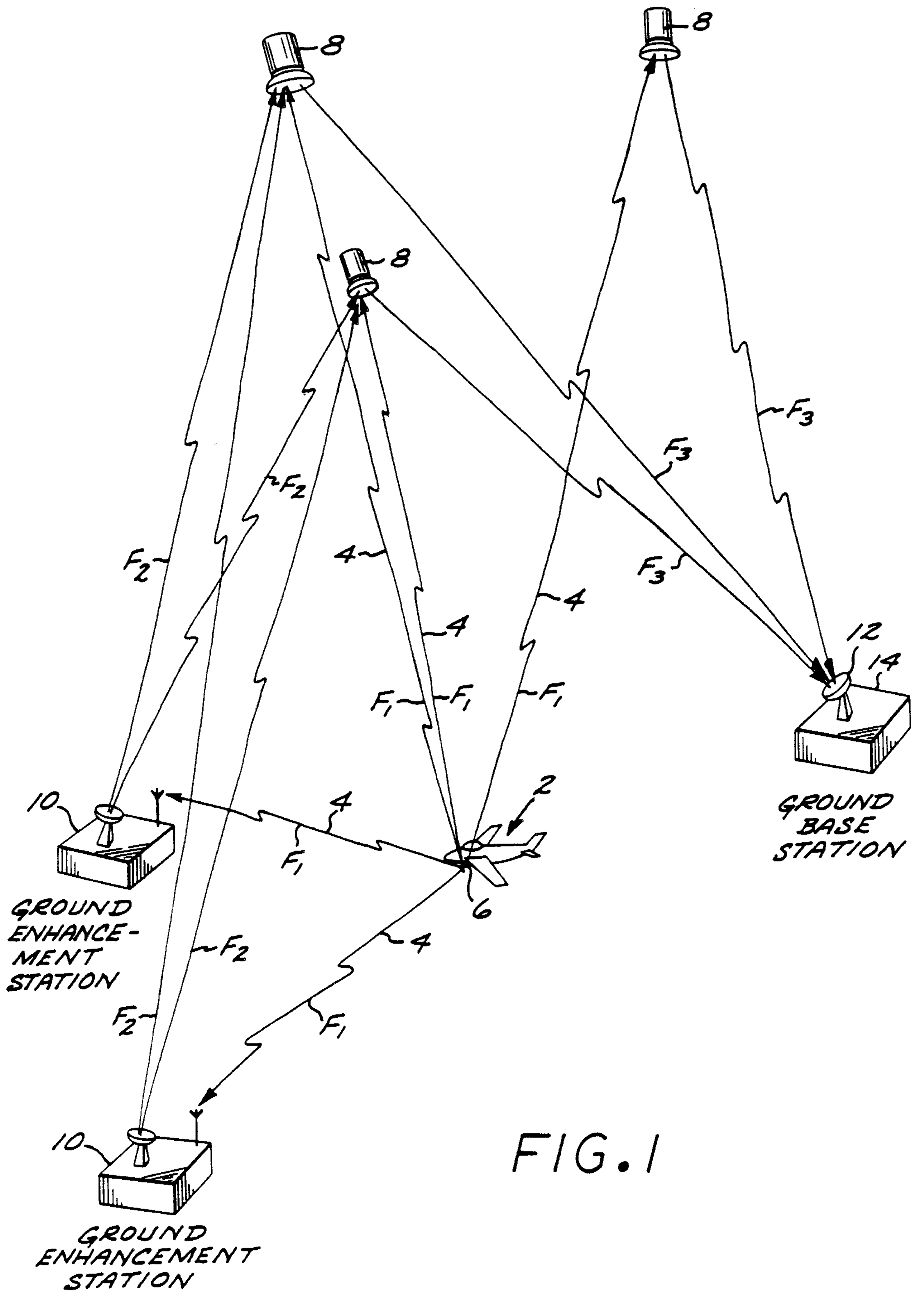
8
8
8
$F_2$
$F_2$
4
4
4
$F_3$
$F_3$
$F_3$
12
14
$F_1$
$F_1$
$F_1$
GROUND
BASE
STATION
10
4
$F_1$
2
6
GROUND
ENHANCE-
MENT
STATION
$F_2$
4
$F_2$
$F_1$
10
GROUND
ENHANCEMENT
STATION

FIG. 1

FIG. 3

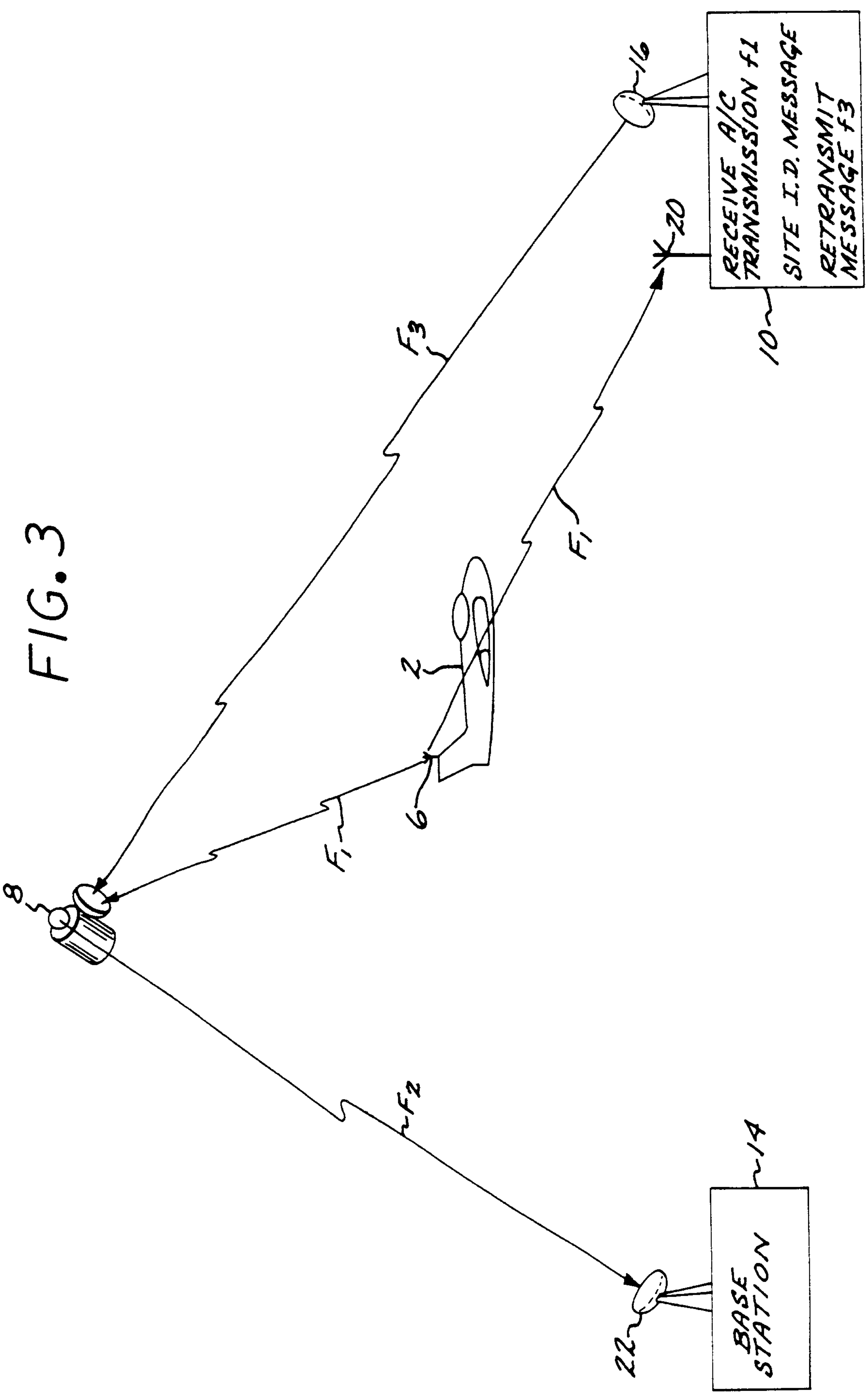
RECEIVE A/C TRANSMISSION f1
SITE I.D. MESSAGE
RETRANSMIT MESSAGE f3
BASE STATION
F3
F1
F1
F2
16
20
10
2
6
8
14
22

FIG. 2

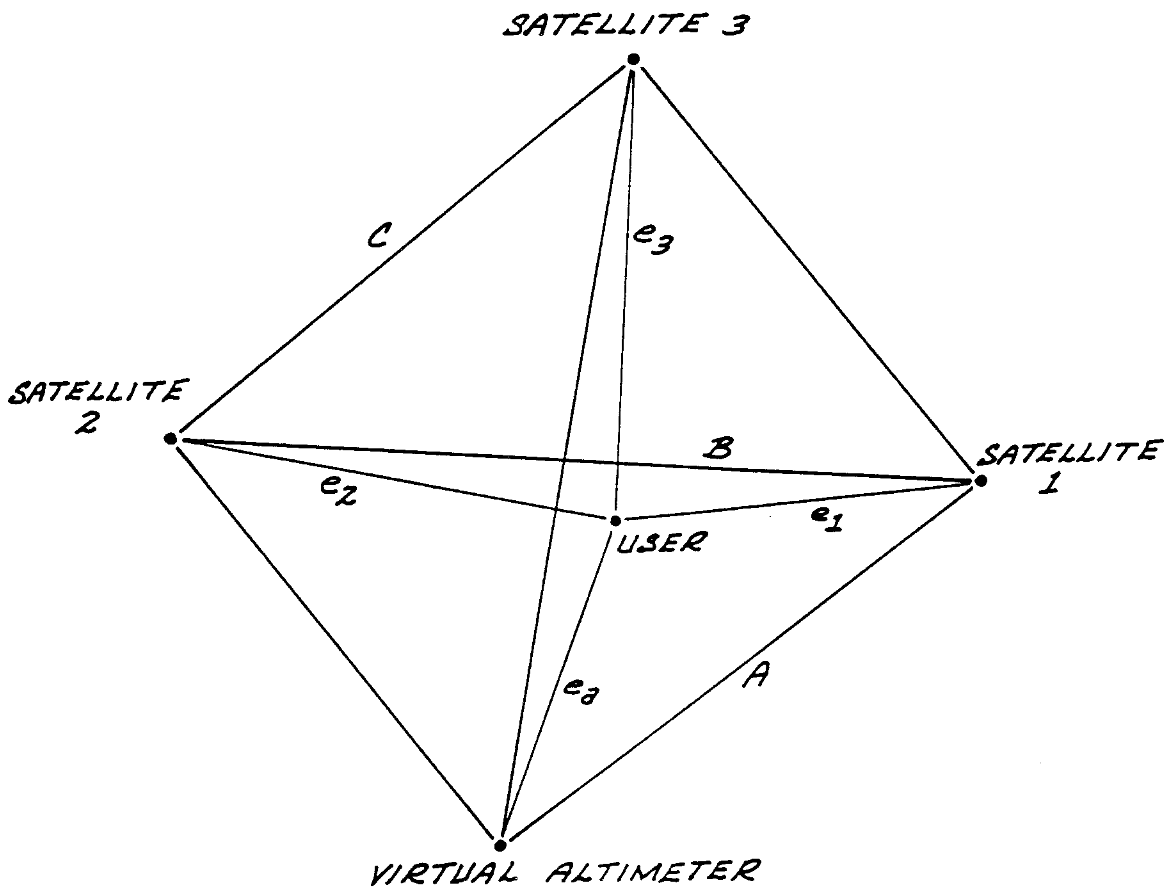
SATELLITE 3
C
$e_3$
SATELLITE 2
B
SATELLITE 1
$e_2$
USER
$e_1$
$e_a$
A
VIRTUAL ALTIMETER

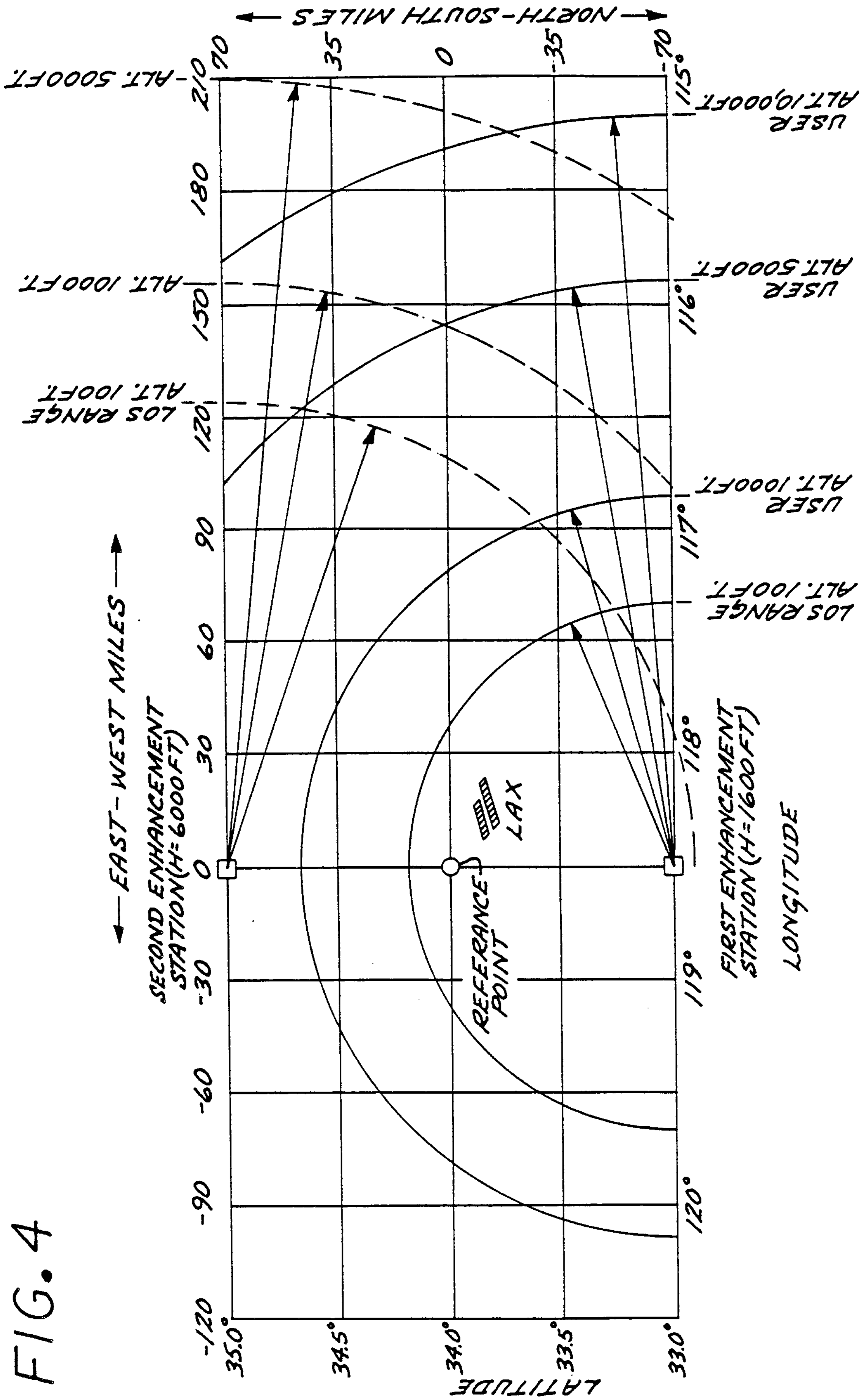
NORTH-SOUTH MILES
70
35
0
-35
-70
EAST-WEST MILES
210
180
150
120
90
60
30
0
-30
-60
-90
-120
ALT. 5000FT.
ALT. 1000FT.
LOS RANGE ALT. 100FT.
USER ALT. 10,000FT.
USER ALT. 5000FT.
USER ALT. 1000FT.
LOS RANGE ALT. 100FT.
115°
116°
117°
118°
119°
120°
SECOND ENHANCEMENT STATION (H=6000FT)
FIRST ENHANCEMENT STATION (H=1600FT)
LAX
REFERANCE POINT
LONGITUDE
35.0°
34.5°
34.0°
33.5°
33.0°
LATITUDE

FIG. 4

FIG. 5

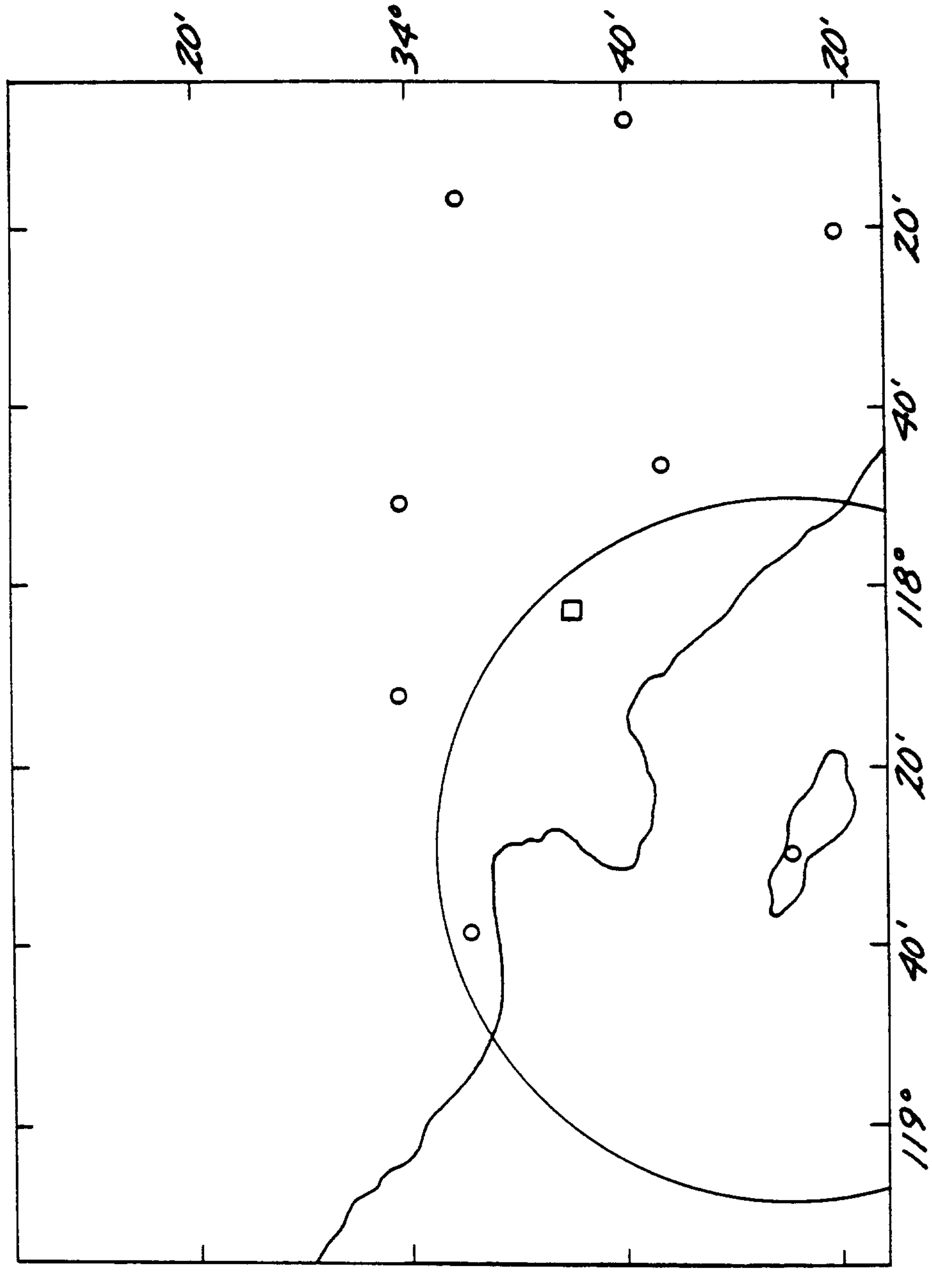

FIG.6

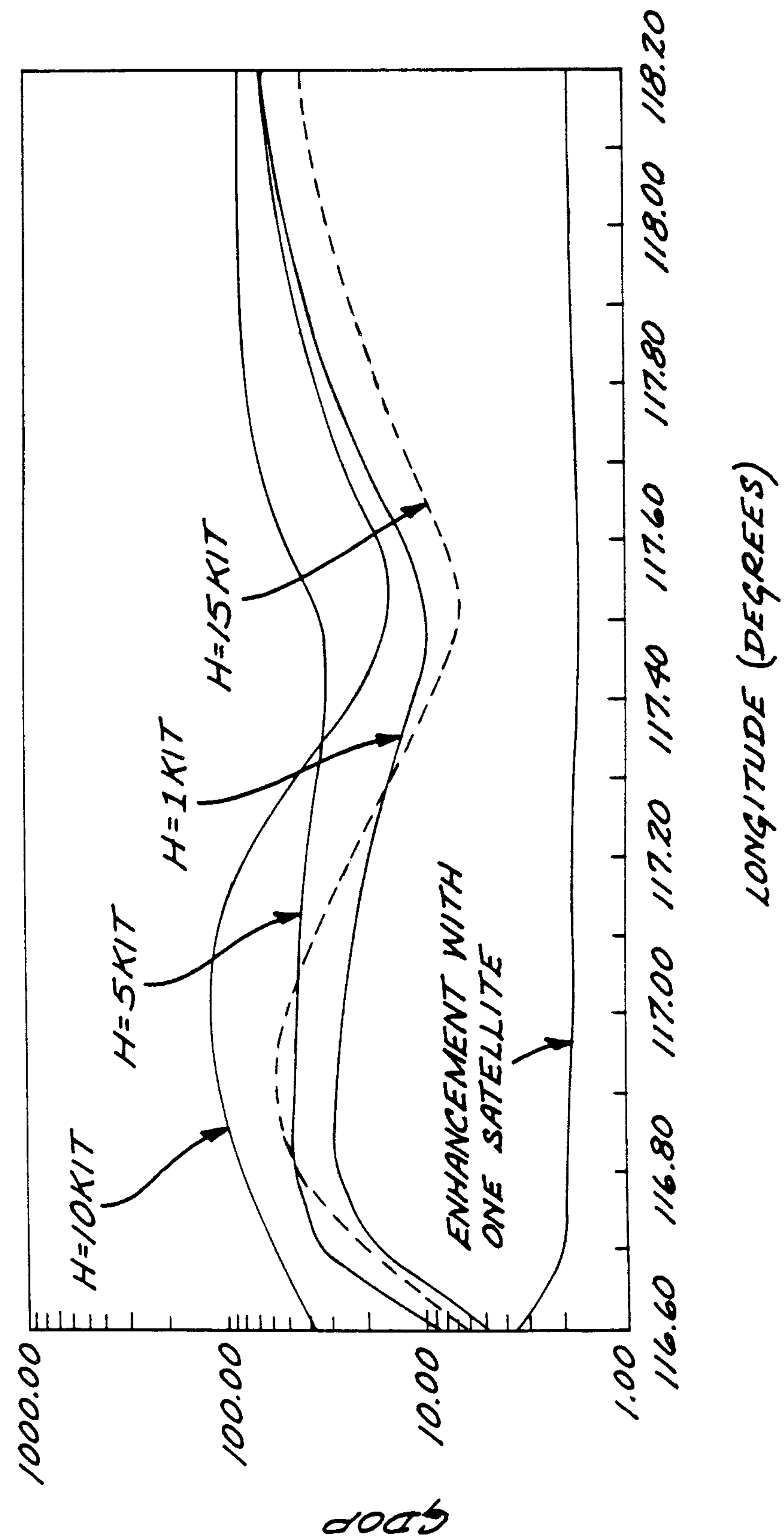
H=10KIT
H=5KIT
H=1KIT
H=15KIT
ENHANCEMENT WITH ONE SATELLITE
GDOP
1000.00
100.00
10.00
1.00
116.60
116.80
117.00
117.20
117.40
117.60
117.80
118.00
118.20
LONGITUDE (DEGREES)

FIG.7

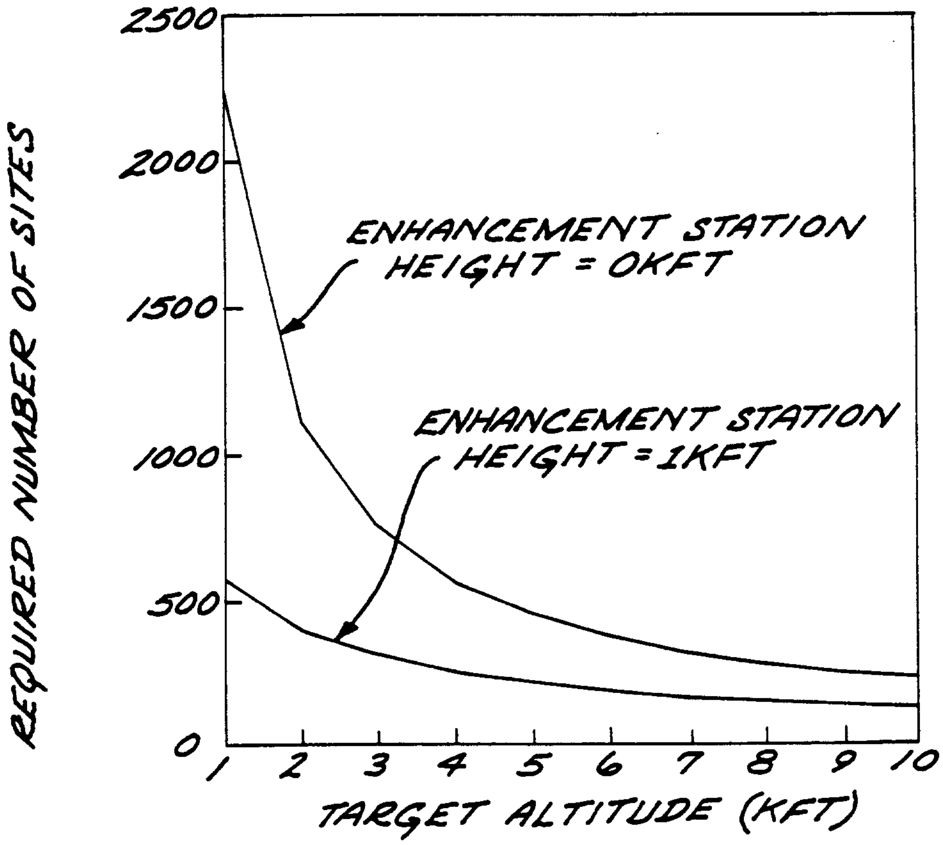
2500
2000
1500
1000
500
0
REQUIRED NUMBER OF SITES
ENHANCEMENT STATION
HEIGHT = 0KFT
ENHANCEMENT STATION
HEIGHT = 1KFT
1
2
3
4
5
6
7
8
9
10
TARGET ALTITUDE (KFT)

FIG.8

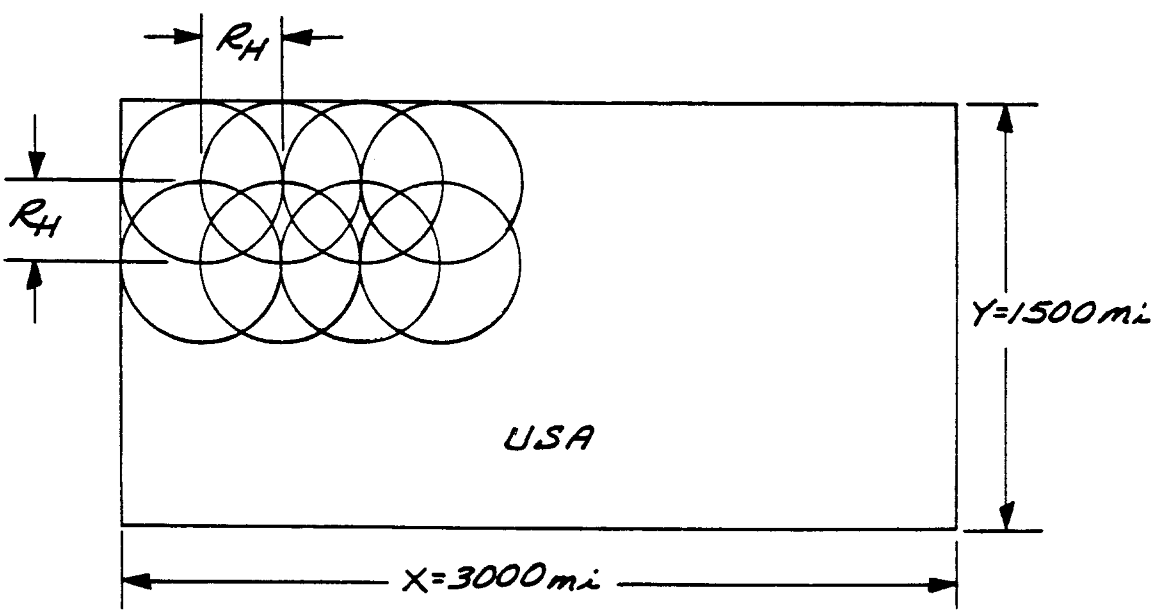
$R_H$
$R_H$
Y=1500mi
USA
X=3000mi

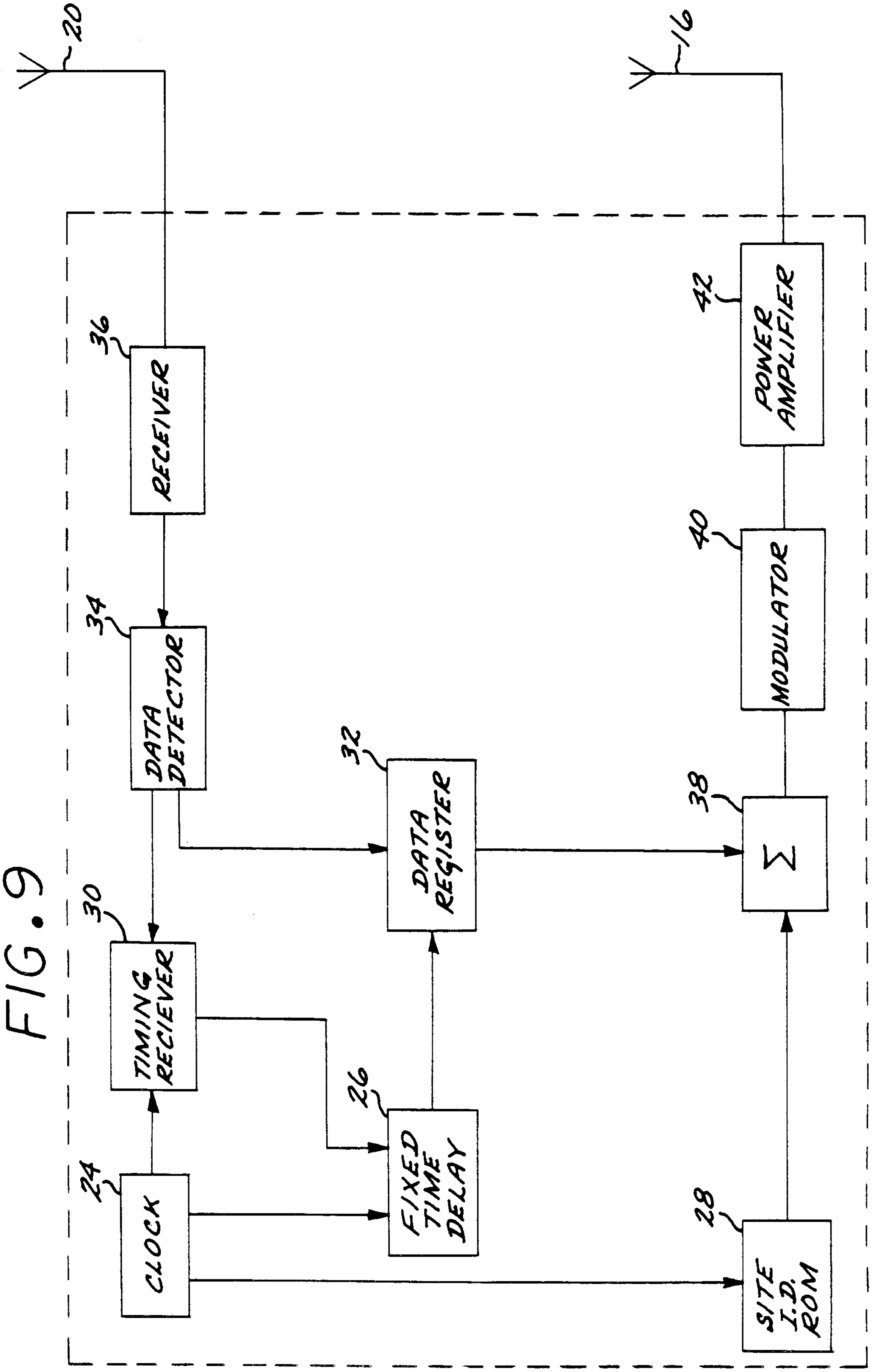
20
16
RECEIVER
36
POWER AMPLIFIER
42
DATA DETECTOR
34
MODULATOR
40
DATA REGISTER
32
Σ
38
TIMING RECIEVER
30
FIXED TIME DELAY
26
CLOCK
24
SITE I.D. ROM
28

FIG.9

FIG. 10

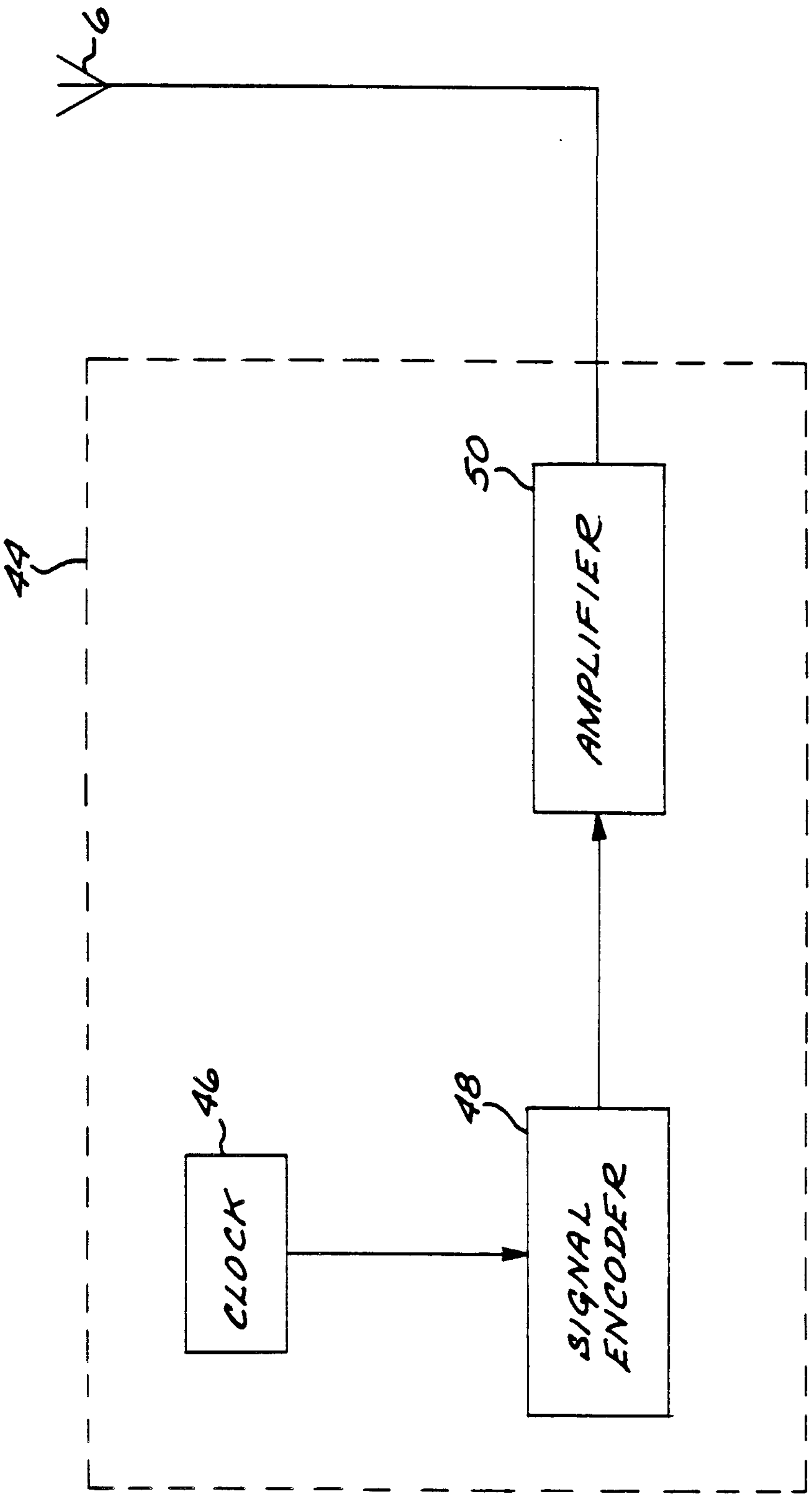

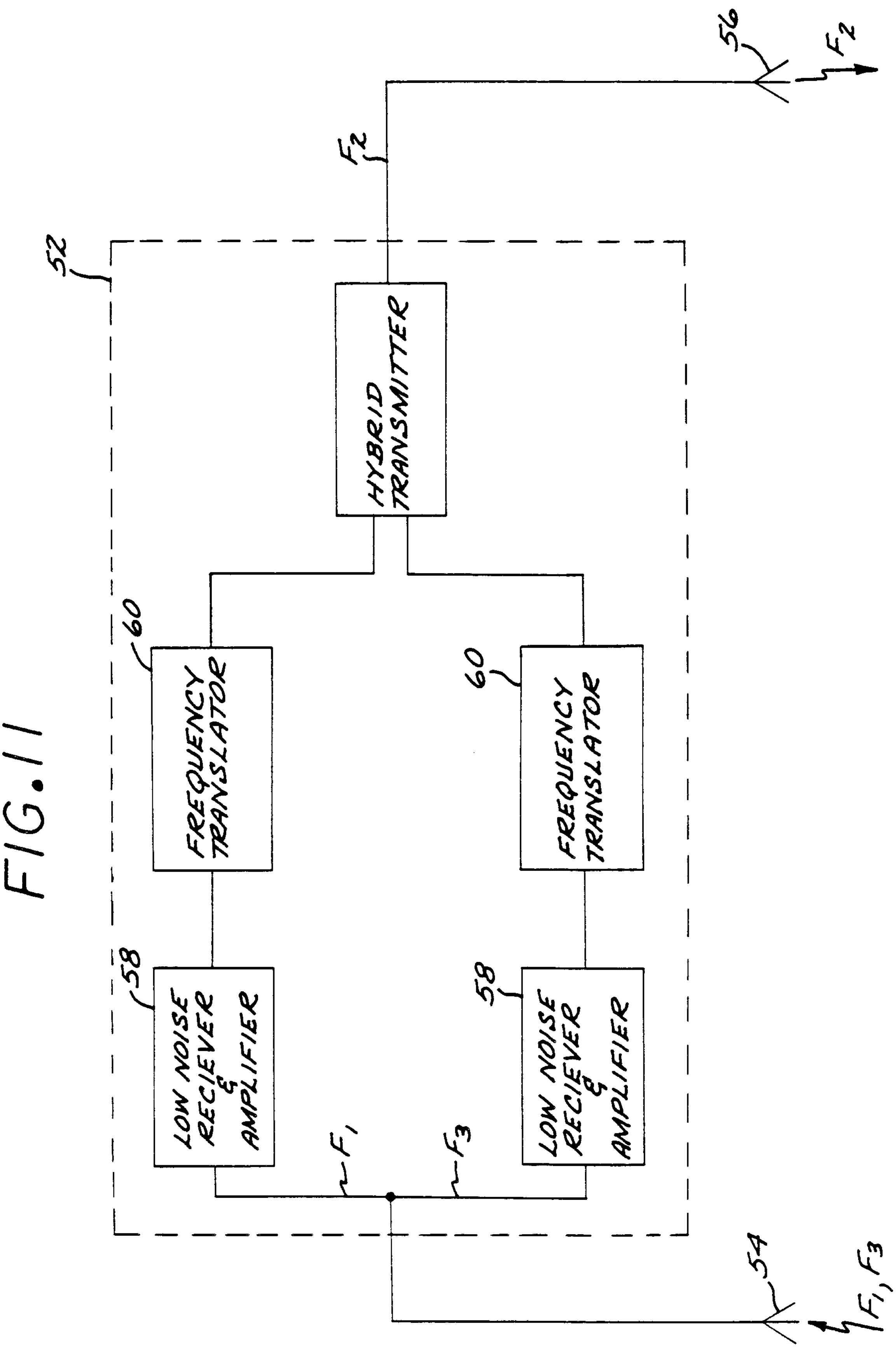
52
56
$F_2$
$F_2$
HYBRID TRANSMITTER
60
FREQUENCY TRANSLATOR
60
FREQUENCY TRANSLATOR
58
LOW NOISE RECIEVER & AMPLIFIER
58
LOW NOISE RECIEVER & AMPLIFIER
$F_1$
$F_3$
54
$F_1, F_3$

FIG. 11

FIG. 12

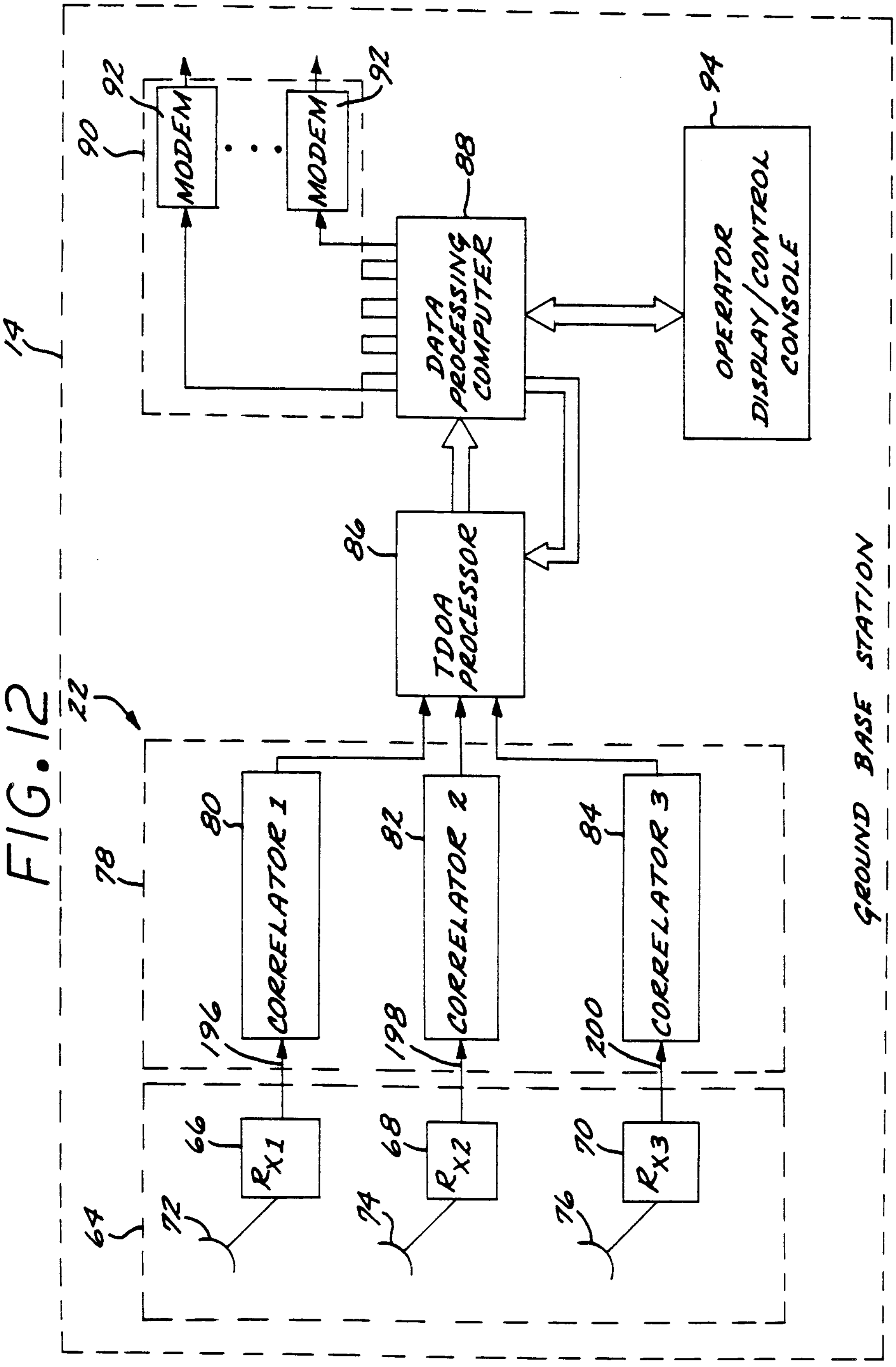
14
22
90
92
MODEM
MODEM
92
88
94
DATA PROCESSING COMPUTER
OPERATOR DISPLAY/CONTROL CONSOLE
86
TDOA PROCESSOR
78
80
CORRELATOR 1
82
CORRELATOR 2
84
CORRELATOR 3
196
198
200
64
72
66
$R_{X1}$
74
68
$R_{X2}$
76
70
$R_{X3}$
GROUND BASE STATION